# EUROPEAN PATENT APPLICATION

(11) **EP 3 933 961 A1**
(43) Date of publication of application: **05.01.2022**
(21) Application number: 19916869.1
(22) Date of filing: 11.12.2019
(51) Int. Cl.: H01M 2/34, H01M 2/26, H01M 10/04, H01M 10/052, H01M 10/0587

(54) **SECONDARY BATTERY**

(30) Priority: 28.02.2019 JP 2019035210
(71) Applicant: Panasonic Intellectual Property Management Co., Ltd., Osaka-shi, Osaka 540-6207 (JP)
(72) Inventor: TACHIBANA, Satoru, Osaka-shi, Osaka 540-6207 (JP)
(74) Representative: Vigand, Philippe
(86) International application number: PCT/JP2019/048588
(87) International publication number: WO 2020/174810

(57) **Abstract**

This secondary battery comprises a positive electrode and a positive electrode lead that is connected to the positive electrode. The positive electrode includes: a stacked portion that has a positive electrode current collector and a positive electrode active material layer formed on at least one surface of the positive electrode current collector, the positive electrode active material layer being formed on at least one surface of the positive electrode; and an exposed portion where the positive electrode current collector is exposed. The positive electrode lead includes one end portion that is connected to the exposed portion and an extended portion that extends outward of the positive electrode from the one end portion and further includes a two-layer structured insulating member that has a base layer and a functional layer that is formed on one surface of the base layer, wherein the functional layer has a heat resistant portion that includes an inorganic insulating material and an adhesive portion having adhesive properties, and the insulating member is arranged on a surface of the positive electrode such that the heat resistant portion faces an outer surface of the one end portion.

## Description

### TECHNICAL FIELD

The present invention relates to a secondary battery.

### BACKGROUND ART

From the viewpoint of ensuring safety of a secondary battery, a structure in which a short-circuited portion is hard to spread so as to suppress heat generation even if the internal short circuit occurs is investigated. The internal short circuit can occur from a connecting point with a positive electrode lead in an exposed part of a positive electrode current collector. Patent Literature 1 discloses that use of an insulating member in which an adhesive layer includes an adhesive agent and an insulative inorganic material can suppress heat generation even if an internal short circuit occurs due to a conductive foreign matter.

### CITATION LIST

### PATENT LITERATURE

PATENT LITERATURE 1: International Publication No. WO 2017/038010

### SUMMARY

Mixing the adhesive agent and the insulative inorganic material, however, has a risk of decrease in adhesive force of the adhesive layer to cause peeling; thus, there is still room for improvement in keeping the adhesiveness of the insulating member.

It is an advantage of the present disclosure to provide a secondary battery that may suppress peeling of the insulating member from the positive electrode, and suppress heat generation even if an internal short circuit occurs due to a conductive foreign matter.

A secondary battery according to an aspect of the present disclosure comprises: a positive electrode; and a positive electrode lead connected to the positive electrode, in which: the positive electrode has: a positive electrode current collector; a positive electrode active material layer formed on at least one surface of the positive electrode current collector; a multilayer part in which the positive electrode active material layer is formed on at least one surface of surfaces of the positive electrode; and an exposed part in which the positive electrode current collector is exposed; the positive electrode lead has a one end part connected to the exposed part and an extending part extending from the one end part outside of the positive electrode; the secondary battery further comprises a bilayer-structured insulating member having a substrate layer and a functional layer formed on one surface of the substrate layer; the functional layer has a heat-resistant part including an insulative inorganic material and an adhesive part having adhesiveness; and the insulating member is disposed on a surface of the positive electrode so that the heat-resistant part is opposite to an outer surface of the one end part.

According to the present disclosure, in addition to suppressing peeling of the insulating member from the positive electrode, heat generation may be suppressed even if an internal short circuit occurs due to a conductive foreign matter.

### BRIEF DESCRIPTION OF DRAWING

FIG. 1 is an axial sectional view of a cylindrical secondary battery of an example of an embodiment.
FIG. 2 is a partial top view viewed from one surface side of the positive electrode.
FIG. 3 is a sectional view taken along the line L1-L1 in FIG. 2.

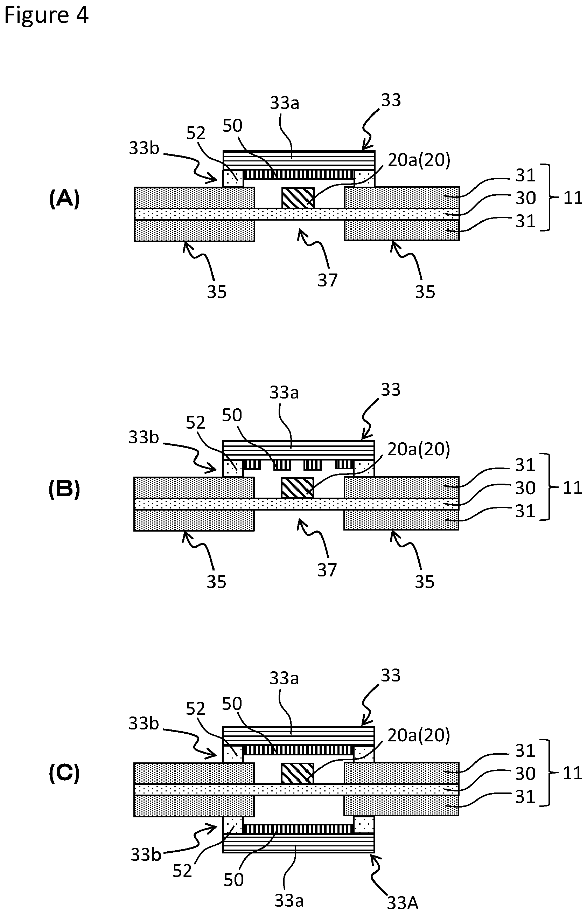

Each of FIGS. 4(A), (B), and (C) is a diagram illustrating another example of the insulating member.

### DESCRIPTION OF EMBODIMENTS

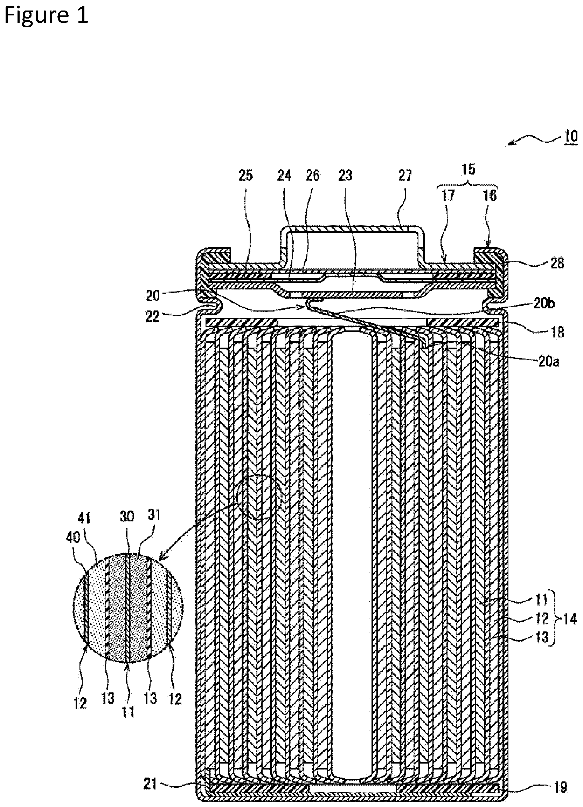

Hereinafter, one example of an embodiment will be described in detail. In the present specification, the longitudinal direction of FIG. 1 may be referred to as "upper/lower. "

FIG. 1 is an axial sectional view of a cylindrical secondary battery of an example of an embodiment. A secondary battery 10 illustrated in FIG. 1 is an example of a lithium-ion secondary battery. The secondary battery according to an embodiment is not limited to a lithium-ion secondary battery, and may be other secondary batteries.

The secondary battery 10 illustrated in FIG. 1 comprises: a wound-type electrode assembly 14 in which a positive electrode 11 and a negative electrode 12 are wound with a separator 13 interposed therebetween; a non-aqueous electrolyte; insulating plates 18 and 19 respectively disposed on the upper and lower sides of the electrode assembly 14; a positive electrode lead 20 and a negative electrode lead 21; an insulating member (not illustrated) covering a portion of the positive electrode lead 20; and a battery case 15 hosing these members described above. The secondary battery 10 may comprise an insulating member covering the negative electrode lead 21.

In the electrode assembly 14, the negative electrode 12 is formed to be larger than the positive electrode 11 in order to prevent precipitation of lithium on the negative electrode 12. Specifically, the length of the negative electrode 12 in the axial direction is larger than the length of the positive electrode 11 in the axial direction. In addition, the length of the negative electrode 12 in the longitudinal direction is larger than the length of the positive electrode 11 in the longitudinal direction. Consequently, when being wound as the electrode assembly 14, a positive electrode active material layer 31 formed on at least a surface of a positive electrode current collector 30 is disposed oppositely to a negative electrode active material layer 41 formed on a surface of a negative electrode current collector 40 with the separator 13 interposed therebetween. The electrode assembly 14 is not limited to a wound-type electrode assembly, and other forms such as, for example, a stacked-type electrode assembly in which the positive electrode 11 and the negative electrode 12 are alternately stacked with the separator 13 interposed therebetween may be employed.

The battery case 15 comprises, for example, a bottomed cylindrical case body 16 having an opening and a sealing assembly 17 sealing the opening of the case body 16. The battery case 15 desirably comprises a gasket 28 provided between the case body 16 and the sealing assembly 17, resulting in ensuring sealability inside the battery. The battery case 15 is not limited to one having a cylindrical shape, and may be ones having, for example, a square shape, a laminated shape, or the like.

The case body 16 has, for example, a projecting portion 22 in which a portion of a side face part projects inward to support the sealing assembly 17. The projecting portion 22 is preferably formed circularly along the circumferential direction of the case body 16, and supports the sealing assembly 17 with the upper face of the projecting portion.

The sealing assembly 17 has a structure in which a filter 23, a lower vent member 24, an insulator 25, an upper vent member 26, and a cap 27 are stacked in this order from the electrode assembly 14 side. Each member constituting the sealing assembly 17 has, for example, a disc shape or a ring shape, and each of the members except for the insulator 25 are electrically connected to each other. The lower vent member 24 and the upper vent member 26 are connected to each other at their respective central parts, and the insulator 25 is interposed between respective peripheral parts. When an internal pressure increases due to heat generated by an internal short circuit or the like, the lower vent member 24, for example, deforms so as to push the upper vent member 26 up toward the cap 27 side and breaks, and a current pathway between the lower vent member 24 and the upper vent member 26 is cut off. When the internal pressure further increases, the upper vent member 26 breaks, and gas is discharged from an opening of the cap 27.

The positive electrode lead 20 has a one end part 20a and an extending part 20b, the one end part 20a is connected to the positive electrode 11, the extending part 20b extending from the one end part 20a to the outside of the positive electrode 11 extends to the sealing assembly 17 through a through hole of the insulating plate 18, and a tip of the extending part 20b is connected to the lower face of the filter 23 of the sealing assembly 17. Consequently, the cap 27 electrically connected to the filter 23 becomes a positive electrode terminal. The negative electrode lead 21 is connected to the negative electrode 12 at one end of the negative electrode lead 21, extends from the negative electrode 12 through the outside of the insulating plate 19, and is connected to the internal face of a bottom part of the case body 16 at the other end of the negative electrode lead 21. Consequently, the case body 16 becomes a negative electrode terminal. The connecting points of the other end of each positive electrode lead 20 and negative electrode lead 21 may be reversed, and for example, the other end of the positive electrode lead 20 may be connected to the case body 16, and the other end of the negative electrode lead 21 may be connected to the lower face of the filter 23 of the sealing assembly 17.

The non-aqueous electrolyte includes a non-aqueous solvent and an electrolyte salt dissolved in the non-aqueous solvent. For the non-aqueous solvent, esters, ethers, nitriles, amides, a mixed solvent of two or more of these solvents, and the like may be used, for example. The non-aqueous solvent may contain a halogen-substituted one in which at least some of hydrogen atoms of these solvents are substituted with a halogen atom such as a fluorine atom. The non-aqueous electrolyte is not limited to a liquid electrolyte, and may be a solid electrolyte. For the electrolyte salt, a lithium salt such as LiPF₆ is used, for example.

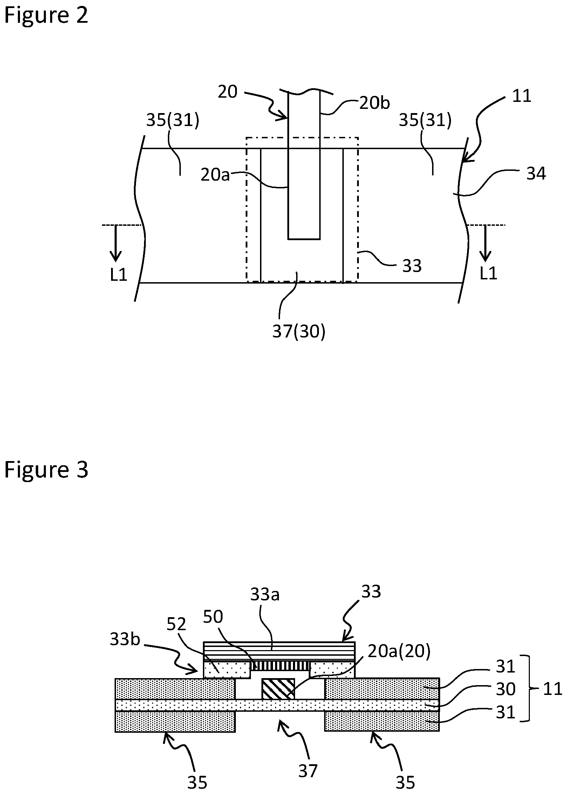

Hereinafter, a constitution of the positive electrode 11, the positive electrode lead 20, and an insulating member 33 covering a portion of the positive electrode lead 20 will be described in detail with reference to FIG. 2 and FIG. 3. FIG. 2 is a partial plan view viewed from one surface side of the positive electrode 11, and FIG. 3 is a sectional view taken along the line L1-L1 in FIG. 2. In FIG. 2, the insulating member 33 is illustrated as a transmissive state with an alternate long-and-short dashed line. Hereinafter, "opposite" refers to the state in which a surface contacts with another surface, or a surface faces another surface through space.

The positive electrode 11 has the positive electrode current collector 30 and the positive electrode active material layer 31 formed on at least one surface of the positive electrode current collector 30, and at least one surface of the surfaces of the positive electrode 11 has: a multilayer part 35 in which the positive electrode active material layer 31 is formed; and an exposed part 37 in which the positive electrode current collector 30 is exposed. The exposed part 37 illustrated in FIG. 3 is provided on both surfaces of the positive electrode 11, but the exposed part 37 may be provided on only one surface of the positive electrode 11. The exposed part 37 may be formed approximately at the center in the longitudinal direction of the positive electrode 11. The exposed part 37 may be formed at any portion of the positive electrode current collector 30, and may be formed at, for example, a tip in the longitudinal direction of the positive electrode current collector 30. The positive electrode active material layer 31 is preferably formed on both surfaces of the positive electrode current collector 30, but may be acceptable as long as the positive electrode active material layer 31 is formed on at least one surface of the positive electrode current collector 30.

For the positive electrode current collector 30, a foil of a metal stable within a potential range of the positive electrode 11, such as aluminum, a film in which the metal is disposed on the surface layer, or the like is used. The thickness of the positive electrode current collector 30 is, for example, 1 µm or more and 100 µm or less, and preferably 10 µm or more and 50 µm or less. The positive electrode active material layer 31 includes a positive electrode active material. The positive electrode active material layer 31 preferably includes a conductive agent and a binder in addition to the positive electrode active material. The thickness of the positive electrode active material layer 31 is, at one side of the positive electrode current collector 30, for example, 30 µm or more and 120 µm or less, and preferably 50 µm or more and 90 µm or less.

Examples of the positive electrode active material included in the positive electrode active material layer 31 include a lithium-transition metal composite oxide. Specifically, lithium cobaltate, lithium manganate, lithium nickelate, lithium-nickel-manganese composite oxide, lithium-nickel-cobalt composite oxide, and the like may be used, and Al, Ti, Zr, Nb, B, W, Mg, Mo, and the like may be added to these lithium-transition metal composite oxides.

Examples of the conductive agent included in the positive electrode active material layer 31 include carbon powder such as carbon black, acetylene black, ketjen black, and graphite. These may be used singly, or in combinations of two or more.

Examples of the binder included in the positive electrode active material layer 31 include a fluoropolymer and a rubber polymer. Examples of the fluoropolymer include polytetrafluoroethylene (PTFE), polyvinylidene fluoride (PVdF), and a modified product thereof, and examples of the rubber polymer include an ethylene-propylene-isoprene copolymer and an ethylene-propylene-butadiene copolymer. These may be used singly, or in combinations of two or more.

The positive electrode 11 may be produced by applying a positive electrode active material slurry including the positive electrode active material, the conductive agent, and the binder on the surface of the positive electrode current collector 30, drying the applied film, and subsequently compressing the applied film with a roller or the like to form the positive electrode active material layer 31 on both surfaces of the positive electrode current collector 30.

In FIG. 2, the positive electrode lead 20 comprises: the one end part 20a connected to the exposed part 37 of the positive electrode current collector 30; and the extending part 20b extending from the one end part 20a to the outside of the positive electrode 11. A method of connecting the one end part 20a of the positive electrode lead 20 and the exposed part 37 of the positive electrode current collector 30 is not particularly limited as long as the electrical connection is secured, and examples thereof include ultrasonic welding. The insulating member 33 may cover a portion of the extending part 20b of the positive electrode lead 20.

A material of the positive electrode lead 20 is preferably a metal and the like such as aluminum and titanium, but not particularly limited. The thickness of the positive electrode lead 20 is, for example, 50 µm or more and 300 µm or less, and preferably 100 µm or more and 200 µm or less.

In FIG. 3, the insulating member 33 has a bilayer structure having a substrate layer 33a and a functional layer 33b formed on one surface of the substrate layer 33a. The functional layer 33b has a heat-resistant part 50 including the insulative inorganic material and an adhesive part 52 having adhesiveness. In more detail, the heat-resistant part 50 is provided approximately at the center in the width direction of the substrate layer 33a, and the adhesive part 52 is provided at both ends in the width direction of the substrate layer 33a and adjacent to the heat-resistant part 50. In other words, the width of the heat-resistant part 50 is smaller than the width of the substrate layer 33a, the heat-resistant part 50 is provided approximately at the center in the width direction of the surface of the substrate layer 33a, and the adhesive part 52 is provided on the surface of the substrate layer 33a other than a position of the heat-resistant part 50. The positional relation between the heat-resistant part 50 and the adhesive part 52 in the functional layer 33b is not limited to one illustrated in FIG. 3, and not particularly limited as long as the insulating member 33 is bonded to the positive electrode 11 and the heat-resistant part 50 is opposite to the outer surface of the one end part 20a.

The thickness of the heat-resistant part 50 may be smaller than the thickness of the adhesive part 52. In this case, since the heat-resistant part 50 may not contact with the one end part 20a, a resistance value of the positive electrode lead 20 does not increase, thereby it is preferable from the viewpoint of battery properties. The thickness of the heat-resistant part 50 may be the same as the thickness of the adhesive part 52, and the thickness of the heat-resistant part 50 may be larger than the thickness of the adhesive part 52. As the thickness of the heat-resistant part 50 is larger, it may be suppressed that a foreign matter penetrates the heat-resistant part 50.

The substrate layer 33a is acceptable as long as being an insulative resin, and for example, PPS (polyphenylene sulfide), PEEK (polyether ether ketone), PI (polyimide), PP (polypropylene), PET (polyethylene terephthalate), PBT (polybutylene terephthalate), and the like may be used. The thickness of the substrate layer 33a is, for example, 5 µm or more and 50 µm or less, and preferably 10 µm or more and 30 µm or less.

The heat-resistant part 50 is a part for increasing heat resistance of the entirety of the insulating member 33. The heat-resistant part 50 includes the insulative inorganic material, and may include the binder from the viewpoint of mechanical strength and bonding ability. Examples of the inorganic material include: a metal oxide such as aluminum oxide, titanium oxide, zirconium oxide, silicon oxide, manganese oxide, magnesium oxide, and nickel oxide; a metal hydroxide such as aluminum hydroxide and magnesium hydroxide; a metal sulfate such as barium sulfate and calcium sulfate; a metal phosphate such as lithium phosphate and magnesium phosphate; a metal nitride such as titanium nitride, boron nitride, aluminum nitride, magnesium nitride, and silicon nitride; a metal fluoride such as aluminum fluoride, lithium fluoride, sodium fluoride, magnesium fluoride, calcium fluoride, and barium fluoride; and a metal carbide such as silicon carbide, boron carbide, titanium carbide, and tungsten carbide.

From the viewpoint of chemical stability to the electrolyte and the like, the inorganic material preferably includes at least one of the group consisting of metal oxide, metal hydroxide, metal sulfate, and metal phosphate insulative materials, and more preferably includes at least one of the group consisting of aluminum oxide, titanium oxide, magnesium oxide, aluminum hydroxide, magnesium hydroxide, barium sulfate, and lithium phosphate. Even if a foreign matter contaminated into the battery penetrates the substrate layer 33a to break a portion of the insulating member 33, an internal short circuit may be suppressed because the heat-resistant part 50, which includes highly heat-resistant and insulative inorganic material, remains between the one end part 20a and the negative electrode 12. Even if a foreign matter penetrates the insulating member 33 to reach the one end part 20a and an internal short circuit occurs between the one end part 20a and the negative electrode 12, heat generation of the battery due to the internal short circuit is suppressed and rise in battery temperature is suppressed because the heat-resistant part 50 being around the foreign matter acts as a large resistor.

The surface density of the inorganic material in the heat-resistant part 50 is preferably 0.5 mg/cm² or more and 10 mg/cm² or less. When the surface density of the inorganic material is 0.5 mg/cm² or more, rise in battery temperature due to an internal short circuit is suppressed in comparison with a case where the surface density is less than 0.5 mg/cm². From the viewpoint of cost reduction, the surface density of the inorganic material is preferably 10 mg/cm² or less.

The average particle diameter of the inorganic material is preferably within a range of 0.05 µm or more and 2 µm or less from the viewpoint of capability to further suppress rise in battery temperature due to an internal short circuit and the like. Here, the average particle diameter is a volume average particle diameter measured by a laser diffraction method, and means a median diameter at which a volumetric integrated value is 50% in a particle diameter distribution. The average particle diameter may be measured by using, for example, a laser diffraction and scattering-type particle size distribution measuring device (manufactured by HORIBA, Ltd.).

The binder included in the heat-resistant part 50 is preferably a substance that is soluble in a solvent such as, for example, N-methyl-2-pyrrolidone (NMP) or water, and that is chemically stable in the positive electrode. Examples thereof include polytetrafluoroethylene (PTFE), polyvinylidene fluoride (PVdF), polyacrylic acid, polyacrylonitrile, polyisobutylene, and polyisoprene.

The heat-resistant part 50 may include a polymer having bonding ability. In other words, as the binder included in the heat-resistant part 50, a polymer having bonding ability may be included. Including the polymer allows not only the adhesive part 52, described later, but also the heat-resistant part 50 to contribute to bonding between the insulating member 33 and the positive electrode 11, thereby the including is preferable since bonding force between the insulating member 33 and the positive electrode 11 further increases.

The polymer may include at least one of the group consisting of an acrylic polymer, an acrylonitrile polymer, and a rubber polymer.

The thickness of the heat-resistant part 50 is preferably 1 µm or more and 30 µm or less, more preferably 5 µm or more and 25 µm or less, and particularly preferably 7 µm or more and 20 µm or less. By setting the thickness of the heat-resistant part 50 to be 1 µm or more, occurrence of an internal short circuit or rise in battery temperature is suppressed in comparison with a case where the thickness is less than 1 µm if a foreign matter breaks the insulating member 33. A heat-resistant part 50 having a thickness of more than 30 µm sometimes requires reduction in volume of other constitution members in order to house the electrode assembly 14 in the case body 16 having a predetermined size.

The adhesive part 52 is a part for bonding the insulating member 33 to the surface of the positive electrode 11. Since the adhesive part 52 includes substantially no insulative inorganic material, the adhesive part 52 may strongly bond the insulating member 33 to the positive electrode 11. The thickness of the adhesive part 52 is, for example, 1 µm or more and 30 µm or less, and preferably 5 µm or more and 25 µm or less.

The adhesive part 52 may include at least one of the group consisting of a rubber polymer and an acrylic polymer. Since the rubber polymer and the acrylic polymer have adhesiveness, the insulating member 33 may be bonded to the surface of the positive electrode 11. For example, a silicone polymer may further be included.

A method of producing the insulating member 33 is not particularly limited as long as the aforementioned heat-resistant part 50 and the adhesive part 52 may be formed on one surface of the substrate layer 33a. For example, the heat-resistant part 50 may be formed by applying a slurry in which the inorganic material and the binder are dispersed in a solvent such as NMP on one surface of the substrate layer 33a and drying the slurry. The surface density of the heat-resistant part 50 may be regulated with the amount of the slurry to be applied. The insulating member 33 may be produced by applying an adhesive agent to constitute the adhesive part 52 on the same surface of the substrate layer 33a as the surface on which the heat-resistant part 50 is formed, and subsequently cutting into a predetermined size. The insulating member 33 may also be produced by producing the functional layer 33b including the heat-resistant part 50 and the adhesive part 52 on a surface of a temporary substrate, and subsequently attaching the functional layer 33b to the surface of the substrate layer 33a and removing the temporary substrate. In this case, it is preferable from the viewpoint of bonding ability that the surface of the substrate layer 33a to be attached to the functional layer 33b be subjected to a surface treatment such as corona treatment and plasma treatment, and then the functional layer 33b be attached.

As illustrated in FIG. 3, the insulating member 33 is disposed on the surface of the positive electrode 11 so that the heat-resistant part 50 is opposite to the outer surface of the one end part 20a. The heat-resistant part 50 opposite to the outer surface of the one end part 20a enables to suppress heat generation if an internal short circuit occurs. Here, the outer surface of the one end part 20a of the positive electrode lead 20 is a surface except for a portion contacting with the exposed part 37 of the positive electrode current collector 30. That is, when the positive electrode lead 20 is a plate as illustrated in FIG. 2 and FIG. 3, the outer surface of the one end part 20a is constituted of: a surface opposite to the surface contacting with the exposed part 37 of the positive electrode current collector 30; and a pair of side surfaces. The shape of the positive electrode lead 20 is not limited to a plate and may be a cylinder and the like. In the case of the cylinder and the like, the outer surface of the one end part 20a is a portion of the outer peripheral surface of the cylindrical shape except for a portion contacting with the exposed part 37.

As illustrated in FIG. 3, the insulating member 33 may be disposed on the surface of the positive electrode 11 so that the heat-resistant part 50 is opposite to a portion of the exposed part 37. In other words, by setting the width of the heat-resistant part 50 to be larger than the width of the one end part 20a, the heat-resistant part 50 may be opposite to the outer surface of the one end part 20a and a portion of the exposed part 37. In this case, since the heat-resistant part 50 covers the exposed part 37 in addition to the one end part 20a, safety of the secondary battery 10 further increases.

As illustrated in FIG. 3, the adhesive part 52 may be bonded to the positive electrode active material layer 31. By setting the width of the insulating member 33 to be larger than the width of the exposed part 37 of the positive electrode current collector 30, the adhesive part 52 may be bonded to the surface of the positive electrode active material layer 31 adjacent to the exposed part 37. Consequently, occurrence of an internal short circuit starting from the exposed part 37 may be suppressed, and even if an internal short circuit occurs, rise in battery temperature may be suppressed. Since the positive electrode active material layer 31 has a larger roughness on the surface thereof in comparison with the positive electrode lead 20 and the exposed part 37, the insulating member 33 may be more strongly bonded to the positive electrode 11.

In FIG. 3, the upper and lower surfaces of the insulating member 33 keep a parallel shape to the surface of the positive electrode 11, but the insulating member 33 may have flexibility depending on a material and thickness thereof. In this case, the heat-resistant part 50 or the adhesive part 52 may be contacted with the outer surface of the one end part 20a and the exposed part 37.

Next, another example of the insulating member 33 will be described using FIG. 4.

As illustrated in FIG. 4(A), the insulating member 33 may be disposed on the surface of the positive electrode 11 so that the heat-resistant part 50 is opposite to the entirety of the exposed part 37. In other words, by setting the width of the heat-resistant part 50 to be the same as or larger than the width of the exposed part 37, the heat-resistant part 50 may be opposite to the outer surface of the one end part 20a and the entirety of the exposed part 37. In this case, since the entire part in which a metal is exposed on the surface of a positive electrode plate is covered with the heat-resistant part 50, safety of the secondary battery 10 further increases.

As illustrated in FIG. 4(B), the heat-resistant part 50 may have a single or a plurality of stripe shapes, and the longitudinal direction of the stripe shape may be parallel to the longitudinal direction of the one end part 20a. In this case, the adhesive part 52 may be provided at only both ends in the width direction of the insulating member 33, and may be further provided between the heat-resistant parts 50.

The heat-resistant part 50 may have a single or a plurality of spot shapes. The spot shape may be any shape such as circular, rectangular, and other polygonal. The arrangement of the spots also may be regular or irregular. The adhesive part 52 may be provided at only both ends in the width direction of the insulating member 33, and may be further provided between the heat-resistant parts 50.

As illustrated in FIG. 4(C), another insulating member 33A may be attached to the surface of the positive electrode 11 opposite to the surface of the positive electrode 11 on which the insulating member 33 is attached. By using the two insulating members (33 and 33A), the one end part 20a is preferably sandwiched with the heat-resistant parts 50. In other words, the secondary battery 10 may further comprise another bilayer-structured insulating member 33A having another substrate layer 33a other than the substrate layer 33a and another functional layer 33b formed on one surface of the other substrate layer 33a, in which: the other functional layer 33b may have another heat-resistant part 50 including an insulative inorganic material and another adhesive part 52 having adhesiveness; the other insulating member 33A may be disposed on a surface of the positive electrode 11, the surface not being connected to the positive electrode lead 20; and the other heat-resistant part 50 may be opposite to a position corresponding to the one end part 20a. By setting the heat-resistant part 50 to protect the one end part 20a also from the surface of the positive electrode 11, the surface not being connected to the positive electrode lead 20, safety of the secondary battery 10 further increases.

Hereinafter, the negative electrode 12 and the separator 13 will be described.

The negative electrode 12 comprises a negative electrode current collector and a negative electrode active material layer formed on the negative electrode current collector. For the negative electrode current collector, a foil of a metal stable within a potential range of the negative electrode, such as copper, and a film in which the metal is disposed on the surface layer, or the like may be used. The negative electrode active material layer includes a negative electrode active material. The negative electrode active material layer preferably includes a thickener and a binder in addition to the negative electrode active material.

As the negative electrode active material, a carbon material capable of occluding and releasing lithium ions may be used, and hardly graphitizable carbon, easily graphitizable carbon, fibrous carbon, coke, carbon black, and the like may be used besides graphite. Furthermore, silicon, tin, and an alloy and oxide mainly containing them may be used as a non-carbon-based material.

As the binder, while PTFE and the like may be used as with the case of the positive electrode 11, a styrene-butadiene rubber (SBR), a modified product thereof, and the like may be used. As the thickener, carboxymethyl cellulose (CMC) and the like may be used.

For the separator 13, a porous sheet and the like having ion permeability and insulation property is used, for example. Specific examples of the porous sheet include a fine porous film, a woven fabric, and a nonwoven fabric. As a material of the separator 13, an olefin-based resin such as polyethylene and polypropylene, and cellulose are preferable. The separator 13 may be a laminate having a cellulose fiber layer and a fiber layer of a thermoplastic resin such as an olefin-based resin. In addition, the separator 13 may be a multilayer separator including a polyethylene layer and a polypropylene layer, and a separator in which a material such as an aramid-based resin and a ceramic is applied to a surface thereof may be used.

### EXAMPLES

### <Example 1>

As the positive electrode active material, 100 parts by weight of a lithium-nickel-cobalt-aluminum composite oxide represented by LiNi_{0.88}Co_{0.09}Al_{0.03}O₂, 1 part by weight of acetylene black (AB), and 1 part by weight of polyvinylidene fluoride (PVDF) were mixed, and an appropriate amount of N-methyl-2-pyrrolidone (NMP) was further added thereto to prepare the positive electrode active material slurry. Thereafter, the positive electrode active material slurry was applied on both surfaces of a positive electrode current collector made from an aluminum foil and dried. The resultant product was cut into a predetermined electrode size and rolled by using a roller to produce a positive electrode in which a positive electrode active material layer was formed on both surfaces of the positive electrode current collector. An exposed part (width: 6 mm) on which no positive electrode active material layer was formed and the positive electrode current collector was exposed was formed approximately at the center in the longitudinal direction of the positive electrode. An aluminum positive electrode lead having a thickness of 150 µm and a width of 3.5 mm was bonded to the formed exposed part by ultrasonic welding.

A slurry in which aluminum oxide (average particle diameter: 2 µm) and PVDF as the polymer were dispersed in NMP was applied on a PI film as the substrate layer with a width of 7 mm, and dried to form the heat-resistant part. At this time, the amount to be applied was regulated so that the surface density of the heat-resistant part was 0.5 g/cm². At both ends of the same surface of the PI film on which the heat-resistant part was formed, an acrylic adhesive agent as the adhesive part was applied with a thickness of 7 µm adjacent to the heat-resistant part, and then the PI film was cut into a size of a width of 11 mm to produce an insulating member.

So that the heat-resistant part of the insulating member was disposed on the outer surface of a one end part of the positive electrode lead and the exposed part, the insulating member was attached to the positive electrode. That is, the outer surface of the one end part of the positive electrode lead and the exposed part were covered with the heat-resistant part of the disposed insulating member. When the insulating member was attached to the positive electrode, a pressure of 0.15 N/cm² was applied for 1 second.

Then, a copper foil of thin plate was used as the negative electrode current collector; a negative electrode active material slurry was prepared by dispersing graphite powder, carboxymethyl cellulose (CMC) as the thickener, and styrene-butadiene rubber (SBR) as the binder in water at a ratio of 98:1:1 in terms of respective weight ratio, applied on both surfaces of the current collector, and dried; and the resultant product was compressed by roll pressing so as to have a predetermined thickness. An exposed part in which no negative electrode active material layer was formed and the negative electrode current collector was exposed was formed at an end part in the longitudinal direction of the negative electrode, and a nickel negative electrode lead was bonded to the exposed part by ultrasonic welding. Thereafter, the negative electrode lead on the exposed part and the exposed part were covered with an insulating tape made of a polypropylene film having a thickness of 25 µm.

The produced positive electrode and negative electrode were spirally wound with a separator interposed therebetween to produce a wound-type electrode assembly. For the separator, a polyethylene fine porous film having one surface on which a heat-resistant layer was formed was used, and polyamide and a filler of alumina being dispersed in the heat-resistant layer.

The above-described electrode assembly was housed in a bottomed cylindrical case body having an outer diameter of 18 mm and a height of 65 mm. At this time, the other end part of the positive electrode lead was welded to a sealing assembly, and the other end of the negative electrode lead was welded to the case body. Then, a non-aqueous electrolyte in which LiPF₆ was added to a mixed solvent obtained by mixing ethylene carbonate (EC), ethyl methyl carbonate (EMC), and diethyl carbonate (DEC) at a volume ratio of 3:3:4 so that a concentration of LiPF₆ was 1 mol/L was injected to the case body, and an opening of the case body was subsequently sealed with a gasket and the sealing assembly to produce a 18650-type cylindrical non-aqueous electrolyte secondary battery.

### <Examples 2 to 12>

Positive electrodes and secondary batteries were produced in the same manner as in Example 1 except that the type and average particle diameter of the inorganic material included in the heat-resistant part and the surface density of the heat-resistant part were changed as shown in Table 1.

### <Comparative Example 1>

A positive electrode and a secondary battery were produced in the same manner as in Example 1 except that no heat-resistant part was provided.

### <Comparative Example 2>

A positive electrode and a secondary battery were produced in the same manner as in Example 4 except that no adhesive part was provided.

### [Battery Temperature in Internal Short Circuit Test]

Battery temperature at the time of forcibly causing an internal short circuit was measured with respect to each of the secondary batteries of Examples and Comparative Examples. Each of the secondary batteries was charged at constant current and a current value of 500 mA to a charge termination voltage of 4.2 V, and charged at constant voltage of 4.2 V for 60 minutes. The battery temperature at the time of short circuit due to a foreign matter is the highest arrival temperature obtained by putting a foreign matter (a small nickel piece) on an insulating tape and measuring a temperature of the side part of a battery with a thermocouple at the time of forcibly causing a short circuit in accordance with JIS C 8714. Each result of the Examples and the Comparative Examples is shown in Table 1.

### [Evaluation of Peeling of Insulating Member]

Each of positive electrodes of the Examples and the Comparative Examples was separately provided. The insulating member was attached to the exposed part of the positive electrode and left at 60°C for 1 hour, and then it was determined visually if the insulating member was peeled from the positive electrode or not. Each result of the Examples and the Comparative Examples is shown in Table 1.

**[Table 1]**

| | Insulating tape | | | | Battery temperature at time of internal short circuit (°C) | Peeling |
|---|---|---|---|---|---|---|
| | Structure of functional layer | Inorganic material included in heat-resistant part | Average particle diameter of inorganic material | Surface density of heat-resistant part (mg/cm²) | | |
| Example 1 | On the same surface of substrate layer, heat-resistant part is provided approximately at center in width direction, and adhesive part is provided adjacent to heat-resistant part at both ends in width direction of substrate layer | Aluminum oxide | 2 µm | 0.5 | 43 | Absent |
| Example 2 | | | 2 µm | 2.5 | 30 | Absent |
| Example 3 | | | 2 µm | 10 | 25 | Absent |
| Example 4 | | | 0.5 µm | 0.5 | 44 | Absent |
| Example 5 | | | 0.5 µm | 2.5 | 29 | Absent |
| Example 6 | | | 0.5 µm | 10 | 25 | Absent |
| Example 7 | | | 0.05 µm | 0.5 | 40 | Absent |
| Example 8 | | | 0.05 µm | 2.5 | 28 | Absent |
| Example 9 | | | 0.05 µm | 10 | 25 | Absent |
| Example 10 | | Magnesium hydroxide | 0.5 µm | 2.5 | 29 | Absent |
| Example 11 | | Barium sulfate | 0.5 µm | 2.5 | 31 | Absent |
| Example 12 | | Lithium phosphate | 0.5 µm | 2.5 | 30 | Absent |
| Comparative Example 1 | Adhesive part only | Absent | - | - | 79 | Absent |
| Comparative Example 2 | Heat-resistant part only | Aluminum oxide | 0.5 µm | 0.5 | 44 | Present |

In the test of forcibly causing internal short circuit in the batteries of Examples 1 to 12 and Comparative Examples 1 and 2, heat generation was suppressed in Examples 1 to 12 in which the heat-resistant part was disposed on the surface of the positive electrode so that the heat-resistant part was opposite to the outer surface of the one end part of the positive electrode lead, in comparison with Comparative Example 1 in which no heat-resistant part was disposed. In the batteries of Examples 1 to 12, it is considered that since the heat-resistant part was disposed on the surface of the positive electrode so that the heat-resistant part was opposite to the outer surface of the one end part of the positive electrode lead, the heat-resistant part suppressed deformation/deterioration of the insulating member, and rise in battery temperature at the time of the short circuit due to the foreign matter was suppressed. In addition, no peeling of the insulating member occurred in Examples 1 to 12. In Comparative Example 2 having no adhesive part, peeling of a portion of the heat-resistant part from the positive electrode was detected. If an insulating tape is peeled during production of an electrode assembly, a component of the insulating tape, for example an adhesive agent and the like, adheres to an unintentional portion of the electrode assembly, and can be a foreign matter. Therefore, the insulating tape preferably has a sufficient adhesive strength.

### REFERENCE SIGNS LIST

- 10: secondary battery
- 11: positive electrode
- 12: negative electrode
- 13: separator
- 14: electrode assembly
- 15: battery case
- 16: case body
- 17: sealing assembly
- 18, 19: insulating plate
- 20: positive electrode lead
- 20a: one end part
- 20b: extending part
- 21: negative electrode lead
- 22: projecting portion
- 23: filter
- 24: lower vent member
- 25: insulator
- 26: upper vent member
- 27: cap
- 28: gasket
- 30: positive electrode current collector
- 31: positive electrode active material layer
- 33: insulating member
- 33a: substrate layer
- 33b: functional layer
- 35: multilayer part
- 37: exposed part
- 50: heat-resistant part
- 52: adhesive part

## Claims

1. A secondary battery, comprising:
a positive electrode; and
a positive electrode lead connected to the positive electrode, wherein:
the positive electrode has: a positive electrode current collector; a positive electrode active material layer formed on at least one surface of the positive electrode current collector; a multilayer part in which the positive electrode active material layer is formed on at least one surface of surfaces of the positive electrode; and an exposed part in which the positive electrode current collector is exposed;
the positive electrode lead has a one end part connected to the exposed part and an extending part extending from the one end part outside of the positive electrode;
the secondary battery further comprises a bilayer-structured insulating member having a substrate layer and a functional layer formed on one surface of the substrate layer;
the functional layer has a heat-resistant part including an insulative inorganic material and an adhesive part having adhesiveness; and
the insulating member is disposed on a surface of the positive electrode so that the heat-resistant part is opposite to an outer surface of the one end part.

2. The secondary battery according to claim 1, wherein:
the heat-resistant part is provided approximately at a center in a width direction of the substrate layer; and
the adhesive part is provided at both ends in the width direction of the substrate layer and adjacent to the heat-resistant part.

3. The secondary battery according to claim 1 or 2, wherein the insulating member is disposed on a surface of the positive electrode so that the heat-resistant part is opposite to a portion of the exposed part.

4. The secondary battery according to claim 1 or 2, wherein the insulating member is disposed on a surface of the positive electrode so that the heat-resistant part is opposite to an entirety of the exposed part.

5. The secondary battery according to any one of claims 1 to 4, wherein the adhesive part is bonded to the positive electrode active material layer.

6. The secondary battery according to any one of claims 1 to 5, wherein the heat-resistant part includes a polymer having a bonding ability.

7. The secondary battery according to claim 6, wherein the polymer includes at least one of the group consisting of an acrylic polymer, an acrylonitrile polymer, and a rubber polymer.

8. The secondary battery according to any one of claims 1 to 7, wherein a surface density of the inorganic material in the heat-resistant part is 0.5 mg/cm² or more and 10 mg/cm² or less.

9. The secondary battery according to any one of claims 1 to 8, wherein an average particle diameter of the inorganic material is 0.05 µm or more and 2 µm or less.

10. The secondary battery according to any one of claims 1 to 9, wherein the inorganic material includes at least one of the group consisting of metal oxide, metal hydroxide, metal sulfate, and metal phosphate as insulative materials.

11. The secondary battery according to any one of claims 1 to 10, wherein the adhesive part includes at least one of the group consisting of a rubber polymer and an acrylic polymer.

12. The secondary battery according to any one of claims 1 to 11, wherein a thickness of the heat-resistant part is 1 µm or more and 30 µm or less.

13. The secondary battery according to any one of claims 1 to 12, wherein a thickness of the heat-resistant part is smaller than a thickness of the adhesive part.

14. The secondary battery according to any one of claims 1 to 12, wherein a thickness of the heat-resistant part is the same as a thickness of the adhesive part, or larger than a thickness of the adhesive part.

15. The secondary battery according to any one of claims 1 to 14, wherein the heat-resistant part has a single or a plurality of stripe shapes, and a direction in a longitudinal direction of the stripe shape is parallel to a longitudinal direction of the one end part.

16. The secondary battery according to any one of claims 1 to 15, wherein the heat-resistant part has a single or a plurality of spot shapes.

17. The secondary battery according to any one of claims 1 to 16, further comprising another bilayer-structured insulating member having another substrate layer other than the substrate layer and another functional layer formed on one surface of the other substrate layer, wherein:
the other functional layer has: another heat-resistant part including an insulative inorganic material; and another adhesive part having adhesiveness; and
the other insulating member is disposed on a surface of the positive electrode, the surface not being connected to the positive electrode lead, and the other heat-resistant part is opposite to a position corresponding to the one end part.
